Europäisches Patentamt

⑲ · European Patent Office

Office européen des brevets

(11) Publication number: **0 113 528**
**B1**

## (12) EUROPEAN PATENT SPECIFICATION

(45) Date of publication of patent specification: **20.04.88**

(21) Application number: **83307283.8**

(22) Date of filing: **30.11.83**

(51) Int. Cl.⁴: **F 16 L 37/08**

(54) **Tube couplings.**

(30) Priority: **13.12.82 GB 8235475**

(43) Date of publication of application:
**18.07.84 Bulletin 84/29**

(45) Publication of the grant of the patent:
**20.04.88 Bulletin 88/16**

(84) Designated Contracting States:
**AT DE FR IT**

(56) References cited:
**DE-B-2 025 474**
**GB-A-2 089 455**
**US-A-3 909 046**

(73) Proprietor: **Guest, John Derek**
**"Iona" Cannon Hill Way Bray**
. **Maidenhead Berkshire (GB)**

(72) Inventor: **Guest, John Derek**
**"Iona" Cannon Hill Way Bray**
**Maidenhead Berkshire (GB)**

(74) Representative: **Mayes, Stuart David et al**
**BOULT, WADE & TENNANT 27 Furnival Street**
**London, EC4A 1PQ (GB)**

Courier Press, Leamington Spa, England.

## Description

This invention relates to quick release tube couplings of the kind having a body portion with a bore containing an axially tapered portion cooperating with arms of a collet extending into the bore for gripping a tube inserted into the coupling, the tapered portion being such that axially outward movement of the collet arms engaging the tapered portion of the bore in the coupling body causes the collet arms to be pressed inwardly to grip a tube in the bore. Hence a pull on the tube causes the collet arms to be pressed into tighter engagement with the tube.

A tube may be released from such a coupling by pressing or holding the collet axially inwardly of the coupling body whilst the tube is withdrawn. For this purpose the collet may be arranged to extend axially outwardly of the coupling body and, as described in GB—A—1520742, may have a head, for example, a radially extending flange on this outward portion of the collet to facilitate the application of axial pressure to release a tube.

US—A—3909046 discloses such a tube coupling in which the coupling body has a portion onto which there is sleeve-fitted a cover having a tubular portion extending from the body for guiding the tube into the body and having an annular abutment face which engages against an axially facing step on the body part.

This invention provides tube coupling having a body part having an end into which a bore containing an axially tapered portion extends to receive arms of a collet extending into the bore, the tapered portion being such that axially outward movement of the collet arms engaging the tapered portion causes the collet arms to be pressed inwardly to grip a tube in the bore, and an end cover having a radially inner part extending over the axially outer end of the collet and having a radially outer part encircling and mounted on the outer periphery of the coupling body, the end cover having an aperture portion in the inner part through which a tube can extend into the collet, wherein the inner part of the end cover is spaced sufficiently from said end of the coupling body such that the part of the collet projecting from the body is throughout its range of movement, clear of the cover, and wherein the peripheral part of the coupling body has an encircling channel having parallel sides lying in planes extending transverse to the axis of the body part and the outer part of the end cover is formed with an inwardly extending annular abutment which engages in the channel and has one side face lying in a plane transverse to the coupling axis and engageable with the side of the channel facing towards said end of the body part to limit movement of the cover onto the body part and thereby hold the inner part of the cover spaced at all times from the end of the collet projecting from the body part, the other side face of the abutment being angled with respect to the opposing side face of the channel to provide a camming action with the adjacent side of the channel forcing the abutment out of the channel when the end cover is pulled in a direction away from the end of the coupling body to detach the cover from the body.

The construction in accordance with the invention provides a cover which can readily be attached and detached to the coupling body to provide access to the collet when a tube held in the collet is to be released from the body. The abutment on the coupling body with which the outer peripheral part of the cover is engageable to limit movement of the cover onto the body and the inner portion of the cover is so spaced from the projecting outward end of the collet ensures that the cover cannot engage the collet. Thus the collet protected against accidental impact would cause it to release the tube held therein.

By this arrangement, a tube, before being inserted into the coupling, can be passed through the aperture in the end cover and then inserted in the coupling in the usual way. The coupling can then be resiliently engaged with the coupling body so that the collet is protected from accidental release. It is readily possible however to release a tube when required merely by detaching the cover from the body to reveal the outer end of the collet and then pressing the collet inwardly. The cover may readily be arranged to fit closely around the tube and be formed to protect the coupling against dirt entering under the head of the collet and making release difficult.

The aperture in the end cover may be shaped to have a peripheral surface in the axial direction to facilitate passage of a tube through the aperture. In some cases it may be preferred to form a flexible lip on the periphery of this aperture to seal against a tube inserted through the end cover.

In the following description of a number of embodiments of the invention, reference will be made to the accompanying drawings in which:—

Figure 1 is a longitudinal section through a coupling with an end cover; and

Figures 2 and 3 are sections through two further forms of end cover which may be used with the coupling of Figure 1.

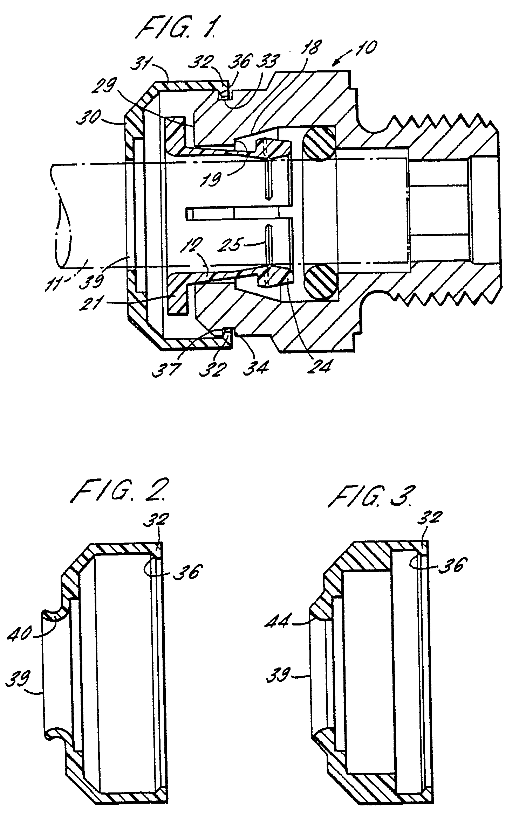

Referring to Figure 1 there is shown a coupling body 10 for effecting a coupling to a tube 11 using a collet 12. A bore extends through the coupling body and has a shoulder forming an end stop for the tube 11 when inserted in the coupling. An enlarged diameter portion of the bore contains an O-ring or other similar seal which abuts against a shoulder in the coupling body and which, in use, seals against the external surface of the tube 11 and against the internal wall surface of the bore in the coupling. The enlarged diameter portion, towards the end from which the tube 11 is inserted, has a tapered portion 18 tapering to a narrower diameter in the axially outward direction, this taper being terminated by an inwardly facing shoulder 19 between the tapered portion 18 and a narrower diameter portion. Within this part of the coupling body is the collet 12 which is formed with a ring portion 21 lying outside the coupling body which ring portion is formed integrally with a plurality of collet arms, typically four arms, formed of resilient material and extending in the axial direction. These arms, in section, are of generally arcuate shape to embrace the tube 11. Towards their axially inner ends, these collet arms are formed with a head portion 24 having a tooth element 25 extending radially inwardly to abut against and bite into the tube to be gripped. Conveniently the collet is formed of plastics material with the tooth element constituted by a metal insert embedded in the plastics material of the collet. The head portions 24 on the ends of the collet arms are forced slightly outwardly against the resilience of the arms when a tube 11 is inserted in the coupling body. These arms will thus engage against the tapered portion 18 of the bore in the coupling body when a tube is inserted into the collet and, if the collet is then moved axially outwardly, that is to say to the left in Figure 1, this engagement with the tapered portion 18 of the coupling body 10 causes the collet 12 to grip the tube more tightly as the tube and collet are pulled outwardly.

A coupling as thus far described is known. To release a tube from the coupling, the collet 12 is pressed axially inwardly, that is to say to the right in Figure 1, so that the collet arms can move radially outwardly releasing the grip on the tube. In order to prevent accidental release of a tube, it has been a practice to put a ring, e.g. a spring clip, around the collet between the outwardly extending head portion 21 and the end face 29 of the body. Such a locking ring has to be accurately dimensioned and, if the coupling is to be used for quickly releasing a tube, provision must be made for easy removal of the locking ring. The present invention is concerned more particularly with another method of preventing accidental release of the collet. In the embodiment shown in Figure 1, this is achieved by the provision of an end cover 30 comprising a cylindrical portion 31 having an inwardly extending lip 32. The end cover is formed of a resilient plastics material and the lip 32 can resiliently engage in an annular groove 33 in the coupling body. The lip 32 abuts against one side wall 34 of this groove which thereby forms a stop preventing axial movement of the cover towards the right in Figure 1. The cover may be removed however by pulling it to the left. Movement in this direction is facilitated by the provision of a sloping face 36 on the lip 32 which face engages the radially outward extremity of the left-hand wall 37 of the groove in the coupling body. The cylindrical portion 31 of the end cover is formed integrally with an end portion having a central aperture 39 through which the tube 11 passes, the cover closely fitting around the tube.

Figure 2 illustrates a modified form of end cover in which a flexible lip 40 is formed around the periphery of the aforementioned aperture 39 so as to bear resiliently against and seal around the tube when a tube is inserted through the aperture.

Figure 3 illustrates another form of end cover where a rounded entry portion 44 is formed around the periphery of the aperture 39 through which the tube passes. The cover of Figure 3 may for example be used with a tube of plastics material which will deform slightly and seal against the periphery of the aperture, the rounded entry portion 44 facilitating insertion of the tube through the aperture.

## Claims

1. A tube coupling (29) having a body part (10) having an end into which a bore containing an axially tapered portion (18) extends to receive arms of a collet (12) extending into the bore, the tapered portion being such that axially outward movement of the collet arms engaging the tapered portion causes the collet arms to be pressed inwardly to grip a tube (11) in the bore, and an end cover (30) having a radially inner part extending over the axially outer end of the collet (12) and having a radially outer part encircling and mounted on the outer periphery of the coupling body (10), the end cover (30) having an aperture portion in the inner part through which a tube (11) can extend into the collet, characterised in that: the inner part of the end cover is spaced sufficiently from said end of the coupling body such that the part of the collet projecting from the body is throughout its range of movement, clear of the cover, and in that the peripheral part of the coupling body has an encircling channel (33) having parallel sides lying in planes extending transverse to the axis of the body part (10) and the outer part of the end cover (30) is formed with an inwardly extending annular abutment which engages in the channel and has one side face lying in a plane transverse to the coupling axis and engageable with the side of the channel facing towards said end of the body part to limit movement of the cover onto the body part and thereby hold the inner part of the cover spaced at all times from the end (21) of the collet projecting from the body part, the other side face of the abutment being angled with respect to the opposing side face of the channel to provide a camming action with the adjacent side of the channel forcing the abutment out of the channel when the end cover is pulled in a direction away from the end of the coupling body to detach the cover from the body.

2. A tube coupling as claimed in claim 1 and for use with a tube (11) of predetermined outside diameter characterised in that the cover (30) is arranged to fit closely around the tube.

3. A tube coupling as claimed in claim 2 characterised in that the aperture (39) in the end cover (30) is shaped to have a peripheral surface (40 or 44) rounded in the axial direction to facilitate passage of a tube through the aperture.

4. A tube coupling as claimed in claim 2 characterised in that the aperture (39) in the end cover (30) has a flexible lip (40) on its periphery to seal against a tube inserted through the end cover.

## Patentansprüche

1. Rohrkupplung (29) mit einem Hauptteil (10), in dessen einem Ende sich eine Bohrung mit einem sich in Axialrichtung verengenden Abschnitt (18) erstreckt, um die Arme einer Klemmhülse (12) aufzunehmen, die in die Bohrung ragt, wobei der sich verengende Abschnitt derart ist, daß die axiale Nachaußenbewegung der mit dem Abschnitt zusammenwirkenden Klemmhülsenarme bewirkt, daß die Klemmhülsenarme nach innen gedrückt werden, um ein Rohr (11) in der Bohrung zu ergreifen, und mit einer Endklappe (30), deren radial innerer Teil sich über das axial äußere Ende der Klemmhülse (12) erstreckt, und deren radial äußerer Teil den Außenumfang des Kupplungshauptteils (10) umgibt und an diesem gelagert ist, wobei die Endkappe (10) im Innenteil einen Öffnungsteil aufweist, durch den sich ein Rohr in die Klemmhülse erstrecken kann, dadurch gekennzeichnet, daß der Innenteil der Endkappe zum Ende des Kupplungshauptteils einen ausreichend großen Abstand hat, damit der vom Hauptteil vorstehende Teil der Klemmhülse auf seinem ganzen Bewegungsbereich räumlich frei von der Endkappe ist, und daß der Umfangsteil des Kupplungshauptteils ein Umlaufende in der Nut (33) aufweist, deren parallele Seiten in Ebenen liegen, die sich quer zur Achse des Hauptteils (10) erstrecken, und daß der Außenteil der Kappe (30) mit einem nach innen ragenden, ringförmigen Vorsprung versehen ist, der in die Nut (33) eingreift und dessen eine Seitenfläche in einer Ebene quer zur Kupplungsachse liegt und mit der dem einen Ende des Hauptteils zugewandten Seite des Ausschnitts zusammenwirken kann, um die Bewegung der Kappe zum Hauptteil zu begrenzen und durch den Innenteil der Kappe immer im Abstand von Ende (21) der am Hauptteil vorstehenden Klemmhülse zu halten, während die andere Seitenfläche des Vorsprungs zur gegenüberliegenden Seitenfläche der Nut einen Winkel einschließt, um mit der benachbarten Seite der Nut eine Nockenwirkung zu erzeugen, um den Vorsprung zwangsweise aus der Nut zu drücken, wenn die Endkappe in Richtung weg vom Ende des Kupplungshauptteils gezogen wird, um die Kappe vom Hauptteil zu lösen.

2. Rohrkupplung nach Anspruch 1 und zur Verwendung mit einem Rohr (11) mit vorbestimmten Außendurchmesser dadurch gekennzeichnet, daß die Kappe (30) so angeordnet ist, daß sie das Rohr eng umschließt.

3. Rohrkupplung nach Anspruch 2, dadurch gekennzeichnet, daß die Öffnung (39) in der Endkappe (30) so geformt ist, daß sie eine Umfangsfläche (40 oder 44) aufweist, die in axialer Richtung abgerundet ist, um das Durchführen des Rohres (11) durch die Öffnung zu erleichtern.

4. Rohrkupplung nach Anspruch 2, dadurch gekennzeichnet, daß die Öffnung (39) in der Endkappe (30) an ihrem Umfang eine flexible Mündung (40) hat, die gegenüber ein durch die Endkappe geführtes Rohr abdichtet.

## Revendications

1. Raccord de tuyau (29) comprenant une partie de corps (10) ayant une extrémité dans laquelle un trou contenant une portion effilée axialement (18) s'étend pour recevoir des bras d'une douille (12) s'étendant dans le trou, la portion effilée étant telle que le mouvement axial extérieur des bras de la douille s'engageant dans la portion effilée, pousse lesdits bras à être avancés intérieurement pour saisir un tuyau (11) dans le trou, et un couvercle d'extrémité (30) comportant une partie interne radiale s'étendant au-delà de l'extrémité externe axiale de la douille (12) et ayant une partie externe radiale encerclant et montée sur la périphérie externe du corps du raccord (10), le couvercle d'extrémité (30) comportant une portion d'ouverture dans la partie interne à travers laquelle un tuyau (11) peut s'étendre dans la douille, caractérisé en ce que:

la partie interne du couvercle d'extrémité est espacée suffisamment de ladite extrémité du corps de raccord de telle sorte que la partie de la douille émergent du corps va d'un bout à l'autre de son étendue de mouvement, dégagée du couvercle, et en ce que la partie périphérique du corps de raccord comporte un canal l'entourant (33) ayant des côtés parallèles disposés dans des plans s'étendant transversalement à l'axe de la partie de corps (10) et la partie externe du couvercle d'extrémité (30) est formée avec une butée annulaire s'étendant vers l'intérieur qui s'engage dans le canal et comprend une face latérale disposée dans un plan transversal à l'axe du raccord et qui peut être engagée sur le côté du canal faisant face à ladite extrémité de la partie de corps pour limiter le mouvement du couvercle sur la partie de corps et donc tenir la partie interne du couvercle espacée à tout moment de l'extrémité (21) de la douille émergent de la partie de corps, l'autre face latérale de la butée étant disposée angulairement en relation avec la face latérale opposée du canal afin d'assurer une action de came avec le côté adjacent du canal forçant la butée hors du canal lorsque le couvercle d'extrémité est tiré dans une direction en s'éloignant de l'extrémité du corps du raccord pour détacher le couvercle du corps.

2. Raccord de tuyau selon la revendication 1, destiné à être utilisé avec un tuyau (11) de diamètre externe prédéterminé, caractérisé en ce que le couvercle (30) est agencé pour s'ajuster de façon étanche autour du tuyau.

3. Raccord de tuyau selon la revendication 2, caractérisé en ce que l'ouverture (39) dans le couvercle d'extrémité (30) est formée de façon à comporter une surface périphérique (40) ou (44) arrondie dans une direction axiale pour faciliter le passage du tuyau à travers l'ouverture.

4. Raccord de tuyau selon la revendication 2, caractérisé en ce que l'ouverture (39) dans le couvercle d'extrémité (30) comporte une lèvre flexible (40) sur sa périphérie pour fermer de façon étanche un tuyau inséré à travers le couvercle d'extrémité.

**FIG. 1.**

**FIG. 2.**

**FIG. 3.**